# EUROPEAN PATENT SPECIFICATION

(11) **EP 1 293 931 B1**
(45) Date of publication and mention of the grant of the patent: **25.07.2007**
(21) Application number: 02019658.0
(22) Date of filing: 03.09.2002
(51) Int. Cl.: G06K 19/077

(54) **Memory card device**
Speicherkarte
Carte à mémoire

(30) Priority: 14.09.2001 JP 2001280639
(43) Date of publication of application: 19.03.2003
(73) Proprietor: KABUSHIKI KAISHA TOSHIBA, Tokyo (JP)
(72) Inventor: Moro, Hiroyuki, c/o Kabushiki Kaisha Toshiba, Tokyo 105-8001 (JP)
(74) Representative: Henkel, Feiler & Hänzel

(56) References cited:
- EP-A- 0 409 241
- WO-A-00/54140
- WO-A-01/65383
- US-A1- 2001 009 505

## Description

The present invention relates to a card device to be used by attaching to various electronic appliances, and more particularly to a card device having plural operation modes different in the bit width to be used in data transfer.

Various portable electronic appliances are developed recently including personal computer, PDA (Personal Digital Assistant), camera and mobile phone. In these electronic appliances, memory cards are widely used as means of removable storage device. Memory cards include PCMCIA (Personal Computer Memory Card International Association) card (PC card), smaller SD (Secure Digital) card, and others.

The SD card is a memory card incorporating a flash memory, and is particularly designed to meet the demands for smaller size, larger capacity, and higher speed. Data communication for the SD card is based on an improved 9-pin interface. Four pins out of nine pins are assigned as data pins usable in data transfer. The SD card is an improved card of multimedia card (MMC) using 7-pin interface, and in order to maintain compatibility of the MMC, three operation modes are supported, that is, SD 4-bit mode, SD 1-bit mode, and SPI (Serial Peripheral Interface) mode.

In the SD 4-bit mode, by using four data pins DAT0 to DAT3, data transfer with the host is executed in 4-bit width unit. In the SD 1-bit mode, only the data pin DAT0 out of DAT0 to DAT3 is used for data transfer with the host, and data transfer with the host is executed in 1-bit width unit. The data pins DAT1 and DAT2 are not used at all. In the SPI mode, the data pin DAT0 is used for data transfer from the card to the host, and another pin is used for data transfer from the host to the card. Same as in the case of SD 1-bit mode, the data pins DAT1 and DAT2 are not used at all.

Thus, since the SD card is designed to assure compatibility of the MMC, only by making a minimum change in the host controller for the MMC, the host controller capable of controlling not only the MMC but also the SD card can be realized.

When building up the system, for example, if the conventional host controller for the MMC is used, and the SD card is installed in a host device which is not properly modified in data lines corresponding to the increased data pins DAT1 and DAT2 in the SD card, in the case the SD 1-bit mode or the SPI mode is designated from the host device, the SD card itself may malfunction, useless current may flow in the internal circuit to consume extra electric power, or the internal circuit itself may be broken due to flow of a large lead-through current between the power source terminal and grounding terminal of the internal circuit. Such phenomenon is caused when the data pins DAT1 and DAT2 of the SD card which are not used in the SD 1-bit mode or the SPI mode are changed to a floating state.

WO 00/54140 discloses a method and apparatus that multiplexes pins of a PC card to provide communication of two-way, high quality audio data between the PC card and a host computer over a conventional PC card connector. The PC card includes one or more signal drivers, each signal driver coupled to a unidirectional signal line conventionally conveying address data from the host computer to the PC card. The signal drivers are configured to provide data signals to the signal line for communication to the host computer in an active mode and to enter a high impedance state in an inactive mode in response to a control signal received at a control input.

In other words, the PC card of this state of the art includes one or more signal drivers. Each signal driver has an output 312 coupled to a unidirectional signal line through the connector 106 and a control input 314. Each signal driver 310 is configured to provide a data signal to the signal line for communication to the host computer in an active mode and to enter a high impedance state in an inactive mode in response to a control signal received a the control input (page 6, line 29 to page 7, line 2). Thus, the mode does not change the bit width of data transfers.

It is hence required to develop a new system of higher safety and capable of suppressing wasteful power consumption as much as possible.

The present invention aims to provide a card device of higher safety and capable of suppressing wasteful power consumption.

According to the present invention the above object is achieved by a card device as defined in claim 1. The dependent claims are directed to further advantageous aspects of the invention.

The invention can be more fully understood from the following detailed description when taken in conjunction with the accompanying drawings, in which:
FIG. 1 is a block diagram showing the relation between a card device and a host device according to an embodiment of the invention;
FIG. 2 is a block diagram showing a configuration of the card device of the embodiment;
FIG. 3 is a circuit diagram showing an example of a reception buffer to be used in the card device of the embodiment;
FIG. 4 is a circuit diagram showing another example of the reception buffer to be used in the card device of the embodiment;
FIG. 5 is a diagram showing the relation between an operation mode and pin assignment in the card device of the embodiment;
FIG. 6 is a block diagram showing an example of a connection mode of the card device and the host device in the embodiment;
FIG. 7 is a block diagram showing another example of the connection mode of the card device and the host device in the embodiment;
FIG. 8 is a flowchart for explaining the operation of the card device of the embodiment;
FIG. 9 is a block diagram showing a configuration of the card device of the second embodiment; and
FIG. 10 is a flowchart for explaining the operation of the card device in FIG. 9.

An embodiment of a card device according to the present invention will now be described with reference to the accompanying drawings.

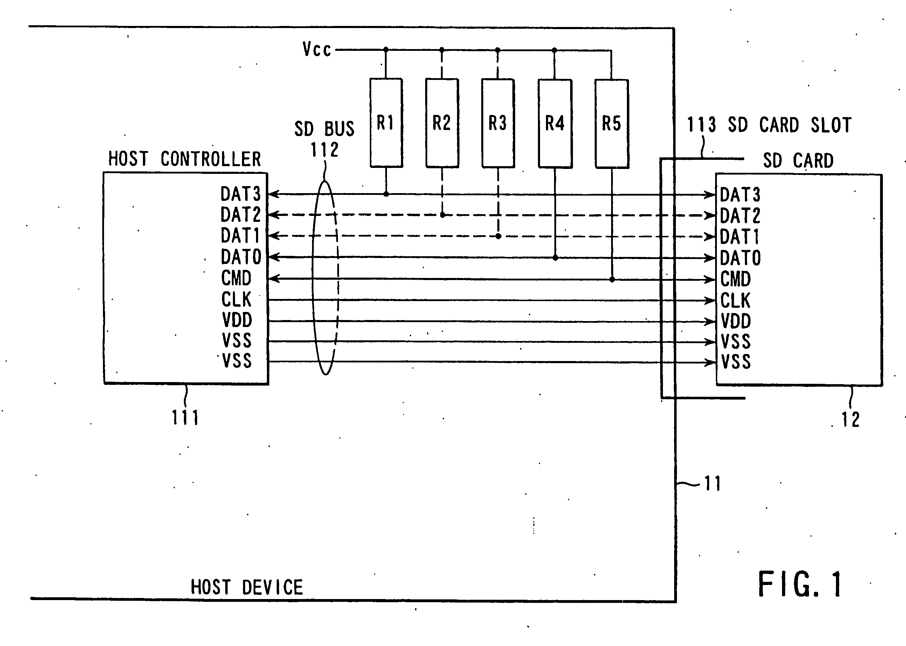

FIG. 1 shows the relation of a card device 12 in an embodiment of the invention, and an electronic appliance (host device) 11 usable by attaching it. Herein, an example of using SD memory card (Secure Digital memory card) as the card device 12 is explained, but the invention is not limited to this card alone, but may be applied also to other cards than the memory card.

The SD memory card 12 is used by detachably attaching to a memory card loading slot (SD card slot) 113 provided in the host device 11, for example, personal computer, PDA, camera, or mobile phone. The host device 11 comprises a host controller 111. Communications between the SD memory card 12 and the host controller 111 are controlled by commands from the host controller 111.

For connecting between the host controller 111 and the SD memory 12, an SD bus 112 comprises six communication lines (DAT0 to DAT3, CMD, CLK, VDD, VSS, VSS). Therefore, the SD memory card 12 comprises four data pins DAT0 to DAT3, command pin CMD, clock signal pin CLK, power supply pin VDD, and two grounding pins VSSs. The functions of the six communication lines (data DAT0 to DAT3, command CMD, and clock CLK) are as follows.

DAT0 to DAT3: Each data line is a bi-directional signal line used in data transfer between the host controller 111 and SD memory card 12. The host controller 111 and SD memory card 12 operate in push-pull mode.

CMD: The command signal line is a bi-directional signal line. It is used in transfer of command from the host controller 111 to the SD memory card 12, and transfer of response from the SD memory card 12 to the host controller 111.

CLK: The clock signal line is a signal line for transmission of clock signal CLK from the host controller 111 to the SD memory card 12. Transfer of command from the host controller 111 to the SD memory card 12, and data transfer between the host controller 111 and the SD memory card 12 are executed in synchronism with the clock signal CLK from the host controller 111 to the SD memory card 12.

Bi-directional data lines DAT3, DAT2, DAT1, DAT0, and command signal line CMD are pulled up to the power source Vcc by means of pull-up resistances R1, R2, R3, R4, R5. These pull-up resistances R1, R2, R3, R4, R5 are provided for preventing the data lines DAT3, DAT2, DAT1, DAT0 and command signal line CMD from being in a floating state while the SD memory card 12 is not inserted, or neither the host controller 111 nor the SD memory card 12 is driving its signal line.

In the SD bus 112, DAT2 and DAT1 are the signal lines which are not used when the SD memory card 12 is used in the SD 1-bit mode or SPI mode. Accordingly, in the host device using the conventional host controller for the MMC which dose not support the SD 4-bit mode directly as the host controller 111, it is possible that data lines DAT2, DAT1 are not wired. In this case, the data pins DAT2, DAT1 of the SD memory card 12 are set to a floating state.

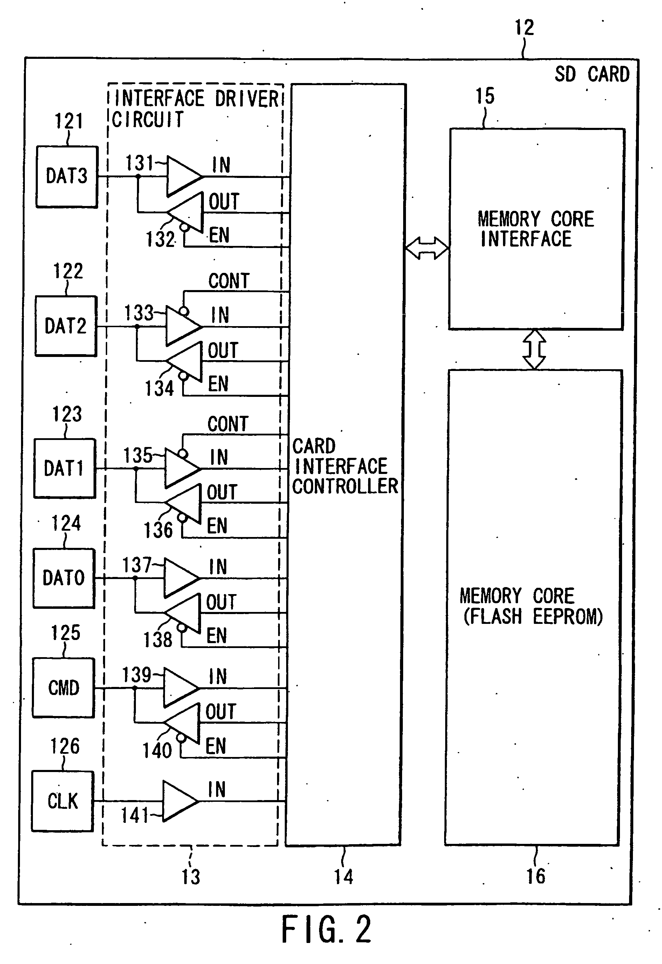

To prevent this, in the SD memory card 12 of the embodiment, a bi-directional buffer having a lead-through current preventing function is used in the interface corresponding to the data pins DAT2, DAT1. A specific configuration of the SD memory card 12 is shown in FIG. 2.

As shown in FIG. 2, the SD memory card 12 incorporates an interface driver circuit 13, card interface controller 14, memory core interface 15, and memory core 16. The memory core 16 comprises nonvolatile memory such as a flash EEPROM.

The card interface controller 14 and memory core interface 15 are internal core circuits for executing the operation (processing the command) in accordance with the command received from the host controller 111 through the interface driver circuit 13. The memory core interface 15 control writing of data into the memory core 16 and reading of data from the memory core 16, in accordance with the command from the host controller 111. The card interface controller 14 mainly controls the communication with the host controller 111, and executes management of operation mode and state of the SD memory card 12. The card interface controller 14 operates in three modes mutually different in the communication protocol, that is, an SD 4-bit mode, SD 1-bit mode, and SPI mode. The command from the host controller 111 designates which operation mode is used for execution of communication with the host controller 111.

The interface driver 13 comprises a driver group for transmitting signals to the SD bus 112 and receiving signals from the SD bus 112.

The driver circuit corresponding to the data pin (DAT3) 121 comprises a bi-directional buffer comprising a receiving buffer 131 and a transmitting buffer 132. The receiving buffer 131 supplies an input signal IN corresponding to the potential of the data pin (DAT3) 121 to the card interface controller 14. The transmitting buffer 132 is, for example, a tristate buffer of open drain type, and when the transmission enable signal EN is set to an active state, the data line DAT3 is driven depending on the output signal OUT from the card interface controller 14. When the transmission enable signal EN is set to an inactive state, the output of the transmitting buffer 132 is set to a high impedance state.

The driver circuit corresponding to the data pin (DAT2) 122 comprises a bi-directional buffer comprising a receiving buffer 133 with lead-through current preventing function and a tristate transmitting buffer 134. The lead-through current preventing function of the receiving buffer 133 is valid when the control signal CONT from the card interface controller 14 is set to an active state, and is invalid when the control signal CONT is set to an inactive state.

When the lead-through current preventing function is invalid (receiving mode), the receiving buffer 133 supplies an input signal IN corresponding to the potential of the data pin (DAT2) 122 to the card interface controller 14. On the other hand, when the lead-through current preventing function is valid (fixed mode), the receiving buffer 133 fixes the potential of the input signal IN at a specific potential corresponding to a logic "H" or logic "L", regardless of the potential of the data pin (DAT2) 122, so that no effect may occur if the data pin (DAT2) 122 is floating. It hence prevents trouble due to transmission of unspecified potential to the internal circuit. Of course, if the data pin (DAT2) 122 is floating, lead-through current does not flow between the power source terminal and the grounding terminal of the receiving buffer 133.

The transmitting buffer 134 drives the data line DAT2 depending on the output signal OUT from the card interface controller 14 when the transmission enable signal EN from the card interface controller 14 is set to an active state. When the transmission enable signal EN is set to an inactive state, the output of the transmitting buffer 134 is set to a high impedance state.

The driver circuit corresponding to the data pin (DAT1) 123 comprises, same as the driver circuit corresponding to the data pin (DAT2) 122, a bi-directional buffer comprising a receiving buffer 135 having lead-through current preventing function and a tristate transmitting buffer 136. The lead-through current preventing function of the receiving buffer 135 is valid when the control signal CONT from the card interface controller 14 is set to an active state, and is invalid when the control signal CONT is set to an inactive state. The transmitting buffer 136 drives the data line DAT1 depending on the output signal OUT from the card interface controller 14 when the transmission enable signal EN from the card interface controller 14 is set to an active state. When the transmission enable signal EN is set to an inactive state, the output of the transmission buffer 136 is set to a high impedance state.

The driver circuit corresponding to the data pin (DAT0) 124 comprises, same as the driver circuit corresponding to the data pin (DAT3) 121, a bi-directional buffer comprising a receiving buffer 137 and a tristate transmitting buffer 138.

The driver circuit corresponding to the command pin CMD 125 comprises a bi-directional buffer comprising a receiving buffer 139 and a tristate transmitting buffer 140, and the driver circuit corresponding to the clock signal CLK pin 126 comprises a receiving buffer 141 only.

The card interface controller 14 activates the lead-through current preventing function of the receiving buffers 133, 135 when the SD 1-bit mode or SPI mode in which the data lines DAT1, DAT2 are not used is designated by a command from the host controller 111, and inactivates the lead-through current preventing function of the receiving buffers 133, 135 when the SD 4-bit mode is designated by a command from the host controller 111.

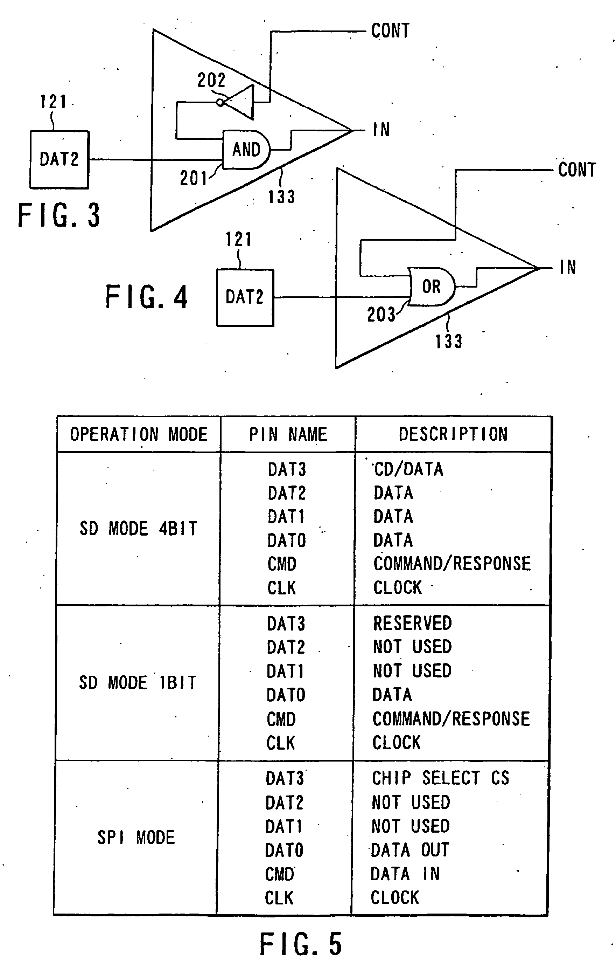

FIG. 3 and FIG. 4 show examples of a circuit configuration of the receiving buffer with the lead-through current preventing function.

FIG. 3 shows a circuit example of the receiving buffer 133 fixing the input signal IN at the "L" level. The receiving buffer 133 comprises two inputs, and the control signal CONT is supplied to one input, and other input terminal is connected to the data pin 121 (DAT2). The control signal CONT is supplied to the first input of a two-input AND gate 201 through an inverter 202, and the potential of the data pin 121 (DAT2) is applied to the second input. When the control signal CONT is set to an inactive state of the "L" level, a signal of the "H" level is supplied to the first input of the AND gate 201, and therefore the AND gate 201 outputs the input signal IN depending on the potential of the data pin 121 (DAT2). On the other hand, when the control signal CONT is set to an active state of the "H" level, a signal of the "L" level is supplied to the first input of the AND gate 201 through the inverter 202, and the AND gate 201 outputs the input signal IN of the "L" level, regardless of the potential of the data pin 121 (DAT2). As a result, the input signal IN is fixed at the "L" level. That is, when the control signal CONT is set to an active state of the "H" level, the operation of the AND gate 201 is dominated by the control signal CONT, and the potential of the data pin 121 (DAT2) has no effect on the operation of the AND gate 201. Accordingly, it is understood that the receiving buffer capable of fixing the output only by the control signal CONT prevents the lead-through current from flowing if the data pin 121 (DAT2) is set to a floating state as far as the control signal CONT is set to an active state.

FIG. 4 shows a circuit example of the receiving buffer 133 when fixing the input signal IN at the "H" level. The receiving buffer 133 comprises two inputs, and the control signal CONT is supplied to one input, and other input terminal is connected to the data pin 121 (DAT2). The control signal CONT is supplied to the first input of a two-input OR gate 203, and the potential of the data pin 121 (DAT2) is applied to the second input. When the control signal CONT is set to an inactive state of the "L" level, the OR gate 203 outputs the input signal IN depending on the potential of the data pin 121 (DAT2). On the other hand, when the control signal CONT is set to an active state of the "H" level, the OR gate 203 outputs the input signal IN of the "H" level, regardless of the potential of the data pin 121 (DAT2). As a result, when the control signal CONT is set to an active state of the "H" level, the operation of the OR gate 203 is dominated by the control signal CONT, and the potential of the data pin 121 (DAT2) has no effect on the operation of the OR gate 203. Accordingly, it is understood that the receiving buffer capable of fixing the output only by the control signal CONT prevents the lead-through current from flowing if the data pin 121 (DAT2) is set to a floating state as far as the control signal CONT is set to an active state.

Such configuration of the receiving buffer with the lead-through current preventing function may be also realized, for example, by inserting a transistor which is turned off by the control signal CONT in an active state between a CMOS gate receiving the potential of the data pin 121 (DAT2) and a power supply terminal or between the CMOS gate and a grounding terminal in order to cut off a path between the power supply terminal and the grounding terminal through the CMOS gate and also inserting a transistor which is turned on by the control signal CONT in an active state between an output terminal of the receiving buffer and the grounding terminal or between the output terminal of the receiving buffer and the power supply terminal in order to fix the output of the receiving buffer at the "L" or "H" level.

Referring now to FIG. 5 to FIG. 7, three operation modes are explained, that is, the SD 4-bit mode, SD 1-bit mode, and SPI mode.

FIG. 5 shows pin assignments in the SD 4-bit mode, SD 1-bit mode, and SPI mode. The operation mode of the SD memory card 12 is roughly classified into the SD mode and SPI mode. In the SD mode, the SD memory card 12 is set to the SD 4-bit mode or SD 1-bit mode by a bus width change command from the host controller 111.

Now turning attention to the four data pins DAT3 to DAT0, in the SD 4-bit mode for transferring data in 4-bit width unit, all of four data pins DAT3 to DAT0 are used in data transfer, but in the SD 1-bit mode for transferring data in 1-bit width unit, only the data pin DAT0 is used in data transfer, while data pins DAT1, DAT2 are not used. The data pin DAT3 is used, for example, in asynchronous interruption from the SD memory card 12 to the host controller 111. In the SPI mode, the data pin DAT0 is used in the data signal line (DATA OUT) from the SD memory card 12 to the host controller 111, and the command pin CMD is used in the data signal line (DATA IN) from the host controller 111 to the SD memory card 12. The data pins DAT1, DAT2 are not used. In the SPI mode, the data pin DAT3 is used in transmission of chip select (CS) signal from the host controller 111 to the SD memory card 12.

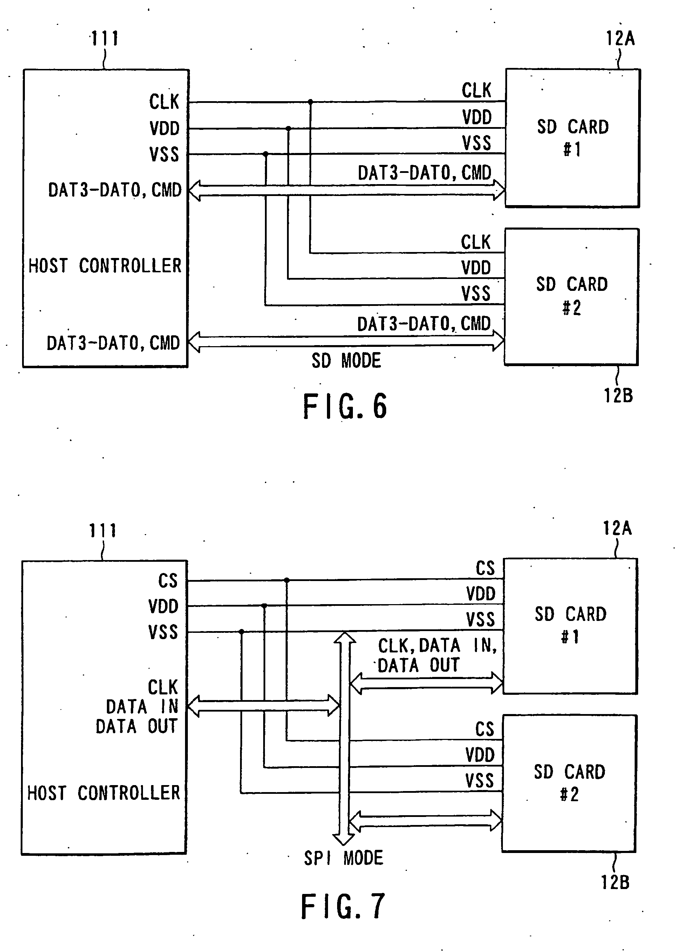

FIG. 6 shows the mode of use of SD bus in the SD modes (SD 4-bit mode, SD 1-bit mode). In the SD mode, in order to control plural SD memory cards 12 by one host controller 111, a synchronous star connection is used as shown in FIG. 6. The clock CLK, power supply VDD, ground VSS are commonly supplied in all SD memory cards 12A and 12B from the host controller 111. The command line CMD and data lines DAT0 to DAT3 are individually provided in the SD memory cards 12A and 12B. In the initializing process of the SD memory cards 12A and 12B, the commands are sent to the individual cards, but after the initializing process, all commands are commonly sent to the SD memory cards 12A and 12B. The cards are selected by broadcasting the command packet including the addressing information to the SD memory cards 12A and 12B. The card selected by the addressing information is required to operate in response to the succeeding command from the host controller 111, but other cards unselected are not required to respond.

FIG. 7 shows a mode of use of SD bus in the SPI mode. In the SPI mode, in order to control plural SD memory cards 12A and 12B by one host controller 111, a bus type connection is used. The clock CLK and data signal lines DATA IN, DATA OUT are commonly connected to each card, and the cards are selected and identified by using a chip select signal CS supplied independently in each card.

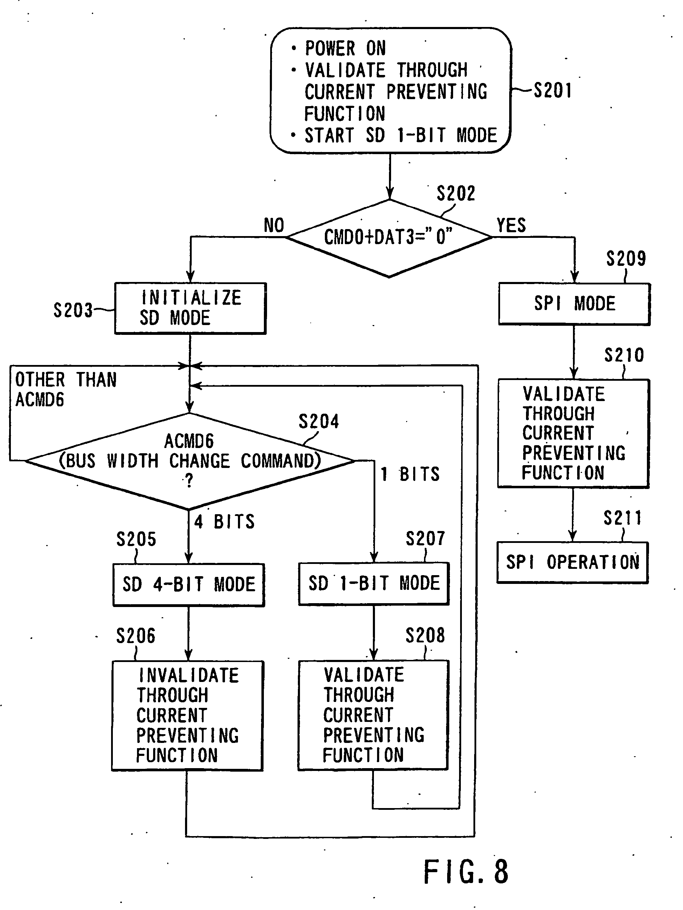

Referring now to the flowchart in FIG. 8, the operation of the SD memory card 12 is explained mainly relating to the control of bi-directional buffer having the lead-through current preventing function.

When the SD memory card 12 is inserted in the host device 11 of a power-on state or when the power of the host device 11 is turned on while the SD memory card 12 is inserted, a power is supplied to the SD memory card 12 from the host controller 111. When the power is supplied, the SD memory card 12 is set to the default SD 1-bit mode, and the control signals CONT corresponding to the receiving buffers 133 (DAT2) and 135 (DAT1) are made active, and the operation is started in the valid state of the lead-through current preventing function of the data pins DAT1 and DAT2 (step S201).

The SPI mode and SD mode are switched over at the first step of initializing process of SD memory card 12, and the host controller 111 outputs a reset command (CMD0) while driving the data line DAT3 in "0", and transfer to the SPI mode is instructed (step S202). When transfer to the SPI mode is not instructed, initializing process is executed in the SD mode (step S203), and when the initializing process is over, the SD memory card 12 waits for a command (standby state) (step S204).

At step S204, when a bus width change command ACMD6 is received together with an argument of changing to the 4-bit mode, the SD memory card 12 is set to the SD 4-bit mode (step S205), and the control signals CONT corresponding to the receiving buffers 133 (DAT2) and 135 (DAT1) are made inactive, and the lead-through current preventing function of the data pins DAT1 and DAT2 is invalidated (step S206).

On the other hand, in the state being set to the SD 4-bit mode, when a bus width change command ACDM6 is received together with an argument of changing to the 1-bit mode, the SD memory card 12 is set to the SD 1-bit mode (step S207), and the control signals CONT corresponding to the receiving buffers 133 (DAT2) and 135 (DAT1) are made active, and the lead-through current preventing function of the data pins DAT1 and DAT2 is validated (step S208). In the SD mode, by repeating from step S204 to step S206, or from step S204 to step S208, the bus width can be changed over whenever desired, and the lead-through current preventing function of the data pins DAT1 and DAT2 is validated or validated as desired.

As step S202, when the host controller 111 initializes the SPI mode, the SD memory card 12 is set to the SPI mode (step S209), and while the lead-through current preventing function of the data pins DAT1 and DAT2 is kept valid (step S210), the operation is started in the SPI mode (step S211).

In this operation, when the data pins DAT1 and DAT2 of the SD bus 112 are not used, the SD memory card 12 validates the lead-through current preventing function of the data pins DAT1 and DAT2, and therefore even in a system where data lines are not properly wired, troubles due to floating of the data pins DAT1 and DAT2 can be prevented.

According to the first embodiment of the present invention, the card device detachably inserted in the host device comprises plural data pins, an internal circuit to be set to either a first operation mode or a second operation mode depending on a command from the host device, for executing data transfer with the host device by using the plural data pins in the first operation mode, and using a specific data pin out of the plural data pins for data transfer with the host device in the second operation mode, a data receiving circuit connected between a data pin which is not used in the second operation mode and the internal circuit, for operating in a reception mode for supplying an input signal depending on the potential of the data pin to the internal circuit, or in a fixing mode for fixing the potential of the input signal supplied from the data pin to the internal circuit at a specific potential, and a data receiving control circuit for setting the data receiving circuit to the reception mode when the internal circuit is set to the first operation mode, and setting the data receiving circuit to the fixing mode when the internal circuit is set to the second operation mode.

In this card device, one of the first and second operation modes mutually different in the number of data pins used in data transfer is designated by a command from the host device. When the second operation mode smaller in the number of data pins used in data transfer is designated from the host, the data receiving circuit connected between the data pin which is not used in the second operation mode and the internal circuit is automatically set to the fixing mode. As a result, for example, if the host device corresponds only to the second operation mode and the data pins which are not used in the second operation mode are not properly processed, since the potential of the input signal supplied to the internal circuit from the data pins which are not used in the second operation mode is fixed automatically at a specific potential, so that the internal circuit can be protected from the effects of floating. On the other hand, when the first operation mode is designated by the host device, this time, the data receiving circuit connected between the data pin which is not used in the second operation mode and the internal circuit is automatically set to the reception mode, and when this card device is inserted in a normal host device supporting the first operation mode, using the plural data pins, data transfer with the host device can be executed normally.

Other embodiments of the card device according to the present invention will be described. The same portions as those of the first embodiment will be indicated in the same reference numerals and their detailed description will be omitted.

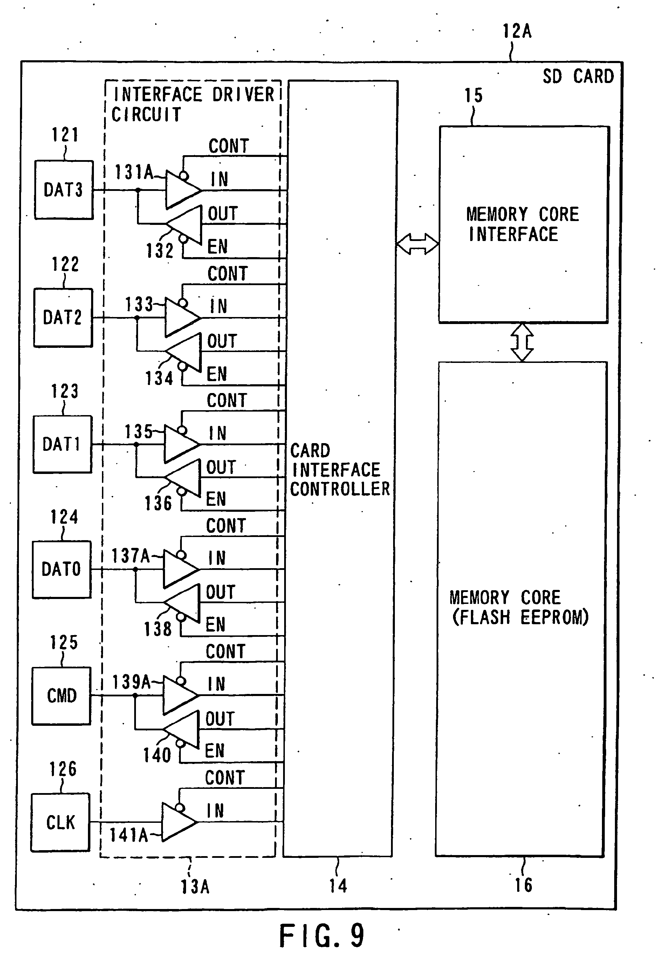

From the viewpoint of saving of power consumption of the SD memory card 12, not only in the data pins DAT1 and DAT2, but also in all other pins receiving signals from the host controller 111, similar lead-through current preventing functions should be provided, and it is desired to validate the lead-through current preventing functions when the corresponding pins are not used to fix the input signal at the "H" or "L" level. As a result, for example, although this SD memory card 12 is not selected, trouble of driving of the gate logic in this SD memory card 12 due to signal addressed to other card can be avoided, and power consumption can be decreased. The second embodiment realizing this configuration of the SD memory card 12 is shown in FIG. 9.

As shown in FIG. 9, in this SD memory card 12A, the lead-through current preventing functions are provided in all receiving buffers 131A, 133, 135, 137A, 139A, and 141A corresponding to the data pin 121 (DAT3) to data pin 124 (DAT0), command pin 125 (CMD), and clock signal pin 126 (CLK). In this case, in addition to the control of changing over validation and invalidation of the lead-through current preventing function of the data pins DAT1 and DAT2 depending on the data transfer bit width as explained in FIG. 8, it is determined whether the pin is necessary or not on the basis of the present state of the SD memory card 12A, and control is executed to change over validation and invalidation of the lead-through current preventing function in each pin depending on the determining result.

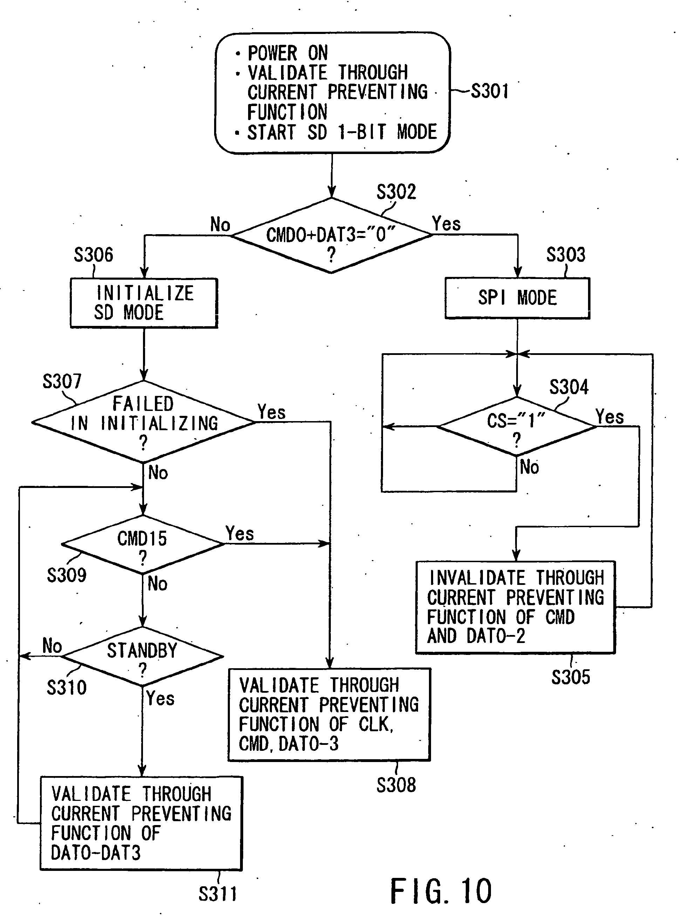

Referring to the flowchart in FIG. 10, the control of changing over validation and invalidation of the lead-through current preventing function on the basis of the state of the card is explained.

When the SD memory card 12A is inserted in the host device 11 of the power-on state or when the power of the host device 11 is turned on while the SD memory card 12A is inserted, the power is supplied to the SD memory card 12A from the host controller 111. When the power is supplied, the SD memory card 12A is set to the default SD 1-bit mode, and the control signals CONT corresponding to the receiving buffers 133 (DAT2) and 135 (DAT1) are made active, and the operation is started in the valid state of the lead-through current preventing function of the data pins DAT1 and DAT2 (step S301). In this case, in other pins than DAT1 and DAT2, that is, in CLK, CMD, DAT0, and DAT3, the lead-through current preventing function is set to an invalid state.

The SPI mode and SD mode are switched over at the first step of initializing process of the SD memory card 12A, and the host controller 111 outputs a reset command (CMD0) while driving the data line DAT3 in "0", and transfer to the SPI mode is instructed (step S302). When transfer to the SPI mode is not instructed, the initializing process is executed in the SD mode (step S303). In the initializing process, if the operating voltage range designated from the host controller 111 does not match with the operating voltage range of the SD memory card 12A, the initialization fails (step S307), and the SD memory card 12A is set to an inactive state. The inactive state is a state that is not required to respond to any command from the host controller 111, and the lead-through current preventing function is validated in CLK, CMD, DAT0 to DAT3 (step S308).

When the initializing process is normally over, the SD memory card 12A waits for a command (standby state or transfer state). If receiving a command (CMD15) showing transfer to the inactive state (step S309), the SD memory card 12A is transferred to the inactive state, and the lead-through current preventing function is validated in CLK, CMD, DAT0 to DAT3 (step S308).

As for other commands than the command (CMD15) showing transfer to the inactive state, the SD memory card 12A operates according to the command (command processing), and when the command processing is over, it comes to a standby state or transfer state again.

The transfer state is a state corresponding to the status being selected by the host controller 111, and the standby state is a state corresponding to a non-selected status. In the standby state, a command about memory access is not transmitted from the host controller 111. The transfer state is a state of the SD memory card 12A capable of receiving a command about memory access from the host controller 111, that is, to wait for reception of the command about memory access. When the command about memory access is received in the transfer state, the SD memory card 12A is changed to a data transmission state or data reception state depending on the type of the command.

While the SD memory card 12A is set to the standby state (step S310), data transfer with the host controller 111 is not executed, and the lead-through current preventing function is validated in DAT0 to DAT3 (step S311). Receiving a command, when the SD memory card 12A gets away from the standby state, to be ready for data transfer with the host controller 111, the lead-through current preventing function is invalidated in DAT0 to DAT3. In the SD 1-bit mode, whether in standby state or not, the lead-through current preventing function is always validated in DAT1. and DAT2, and only the lead-through current preventing function of DAT0 and DAT3 can be changed between validation and invalidation.

At step S302, when the host controller 111 initializes the SPI mode, the SD memory card 12A is set to the SPI mode (step S303). When the chip select signal CS entered to the data pin DAT3 is "1" (step S303), since this SD memory card 12A is not selected, the lead-through current preventing function is validated in CMD, DAT0 to DAT2 (step S305). In this state, when the chip select signal CS becomes "0", the lead-through current preventing function is invalidated in CDM and DAT0.

In this process, wasteful consumption of electric power by signals from pins which are not used can be prevented. On the basis of the command waiting condition from the host, the lead-through current preventing function of each data pin may be validated.

According to the-second embodiment of the present invention, the card device detachably inserted to the host device comprises an interface having plural data pins used in communication with the host device, a nonvolatile memory device, an internal circuit for controlling data writing into the nonvolatile memory device and data reading from the nonvolatile memory device, depending on an access request from the host device entered through the interface, plural receiving circuits connected to each pin used in reception of signal from the host device out of the plural pins, capable of operating either in a reception mode for supplying an input signal depending on the potential of the pin to the internal circuit, and in a fixing mode for fixing the potential of the input signal supplied from the corresponding pin to the internal circuit at a specific potential, and a receiving control circuit for selecting a receiving circuit which is not necessary in communication with the host device out of the plural receiving circuits, and setting the selected receiving circuit to the fixing mode, in accordance with the command from the host device for designating the bit width to be used in data transfer between the internal circuit and the host device or the present state of the internal circuit.

In this card device, not only in the data pins but also in other pins receiving signals from the host, similar data receiving circuits are provided, and when the corresponding pin is not used, the data receiving circuit is set to the fixing mode. By this control, for example, in a system configuration designed to supply signal from the host device commonly in plural card devices, driving of the gate logic in the non-selected card device by a signal address to other card device is avoided, and power consumption of the card device can be saved.

The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein.

## Claims

1. A card device which is detachably attachable to a host device, comprising plural data pins (DAT0 to DAT3) and further comprising:
an internal circuit (14) which is capable of operating in one of a first operation mode for executing data transfer with the host device by using the plural data pins, and a second operation mode for executing data transfer with the host device by using a specific data pin or pins (DATO) out of the plural data pins, a remaining data pin or pins being not used in the second mode;
a data receiving circuit (13) which is connected between the internal circuit and the remaining data pin or pins (DAT1 and DAT2), for supplying an input signal to the internal circuit, the data receiving circuit (13) being capable of operating in one of a reception mode and a fixing mode, and the input signal to be supplied to the internal circuit being dependent on a potential of the remaining data pin or pins (DAT1 and DAT2) in the reception mode and being fixed at a specific potential in the fixing mode; and
a data receiving control circuit (14) which sets the data receiving circuit to the reception mode when the internal circuit is set to the first operation mode, and to the fixing mode when the internal circuit is set to the second operation mode.

2. The device according to claim 1, wherein the data receiving circuit (13) comprises:
a control signal input terminal (CaNT) which receives a control signal from the data receiving control circuit (14); a potential input terminal to which the potential of the unused data pin (DAT1, DAT2) is input; an output terminal (IN) connected to the internal circuit; and
a logic gate (AND, OR) which comprises input terminals connected to the potential input terminal and control signal input terminal, fixes a potential of the output terminal at a logic level of one of "1" and "0" when the control signal is set to an active state, and sets the potential of the output terminal depending on a potential of the potential input terminal when the control signal is set to an inactive state, and
the data receiving control circuit sets the control signal to an active state when the internal circuit is set to the second operation mode, and to an inactive state when the internal circuit is set to the first operation mode.

3. The device according to claim 1, wherein the data receiving control circuit comprises:
a setting circuit which sets the data receiving circuit to the fixing mode in response to supply of power from the host device to the memory card; and a controller which changes the data receiving circuit from the fixing mode to the reception mode when the first operation mode is designated, and maintains the data receiving circuit in the fixing mode when the second operation mode is designated.

4. The device according to claim 1, wherein the internal circuit is set to one of the first and second operation modes depending on a bus width change command from the host device for designating a bit width to be used in data transfer with the host device, and
the data receiving control circuit sets the data receiving circuit to one of the reception mode and fixing mode depending on the bit width designated by the bus width change command.

5. The device according to claim 1, further comprising:
a command pin (CMD) for receiving a command from the host device;
a command receiving circuit (139A) which is connected between the command pin and the internal circuit and is capable of operating in one of a command reception mode for supplying an input command signal depending on a potential of the command pin to the internal circuit, and a command fixing mode for fixing the input command signal at a specific potential; and
a command receiving control circuit which sets the command receiving circuit to one of the command reception mode and command fixing mode depending on an operation mode of the internal circuit.

6. The device according to claim 1, further comprising:
a clock pin (CLK) for receiving a clock signal from the host device;
a clock receiving circuit (141A) which is connected between the clock pin and the internal circuit and is capable of operating in one of a clock reception mode for supplying an input clock signal depending on a potential of the clock pin to the internal circuit, and a clock fixing mode for fixing the input clock signal at a specific potential; and
a clock receiving control circuit which sets the clock receiving circuit to one of the clock reception mode and clock fixing mode depending on an operation mode of the internal circuit.

7. The device according to claim 1, further comprising:
a second data receiving circuit (13A) which is connected between the internal circuit and the specific data pin (DAT0) that is used in the second operation mode and is capable of operating in one of a second reception mode for supplying a second input signal depending on a potential of the specific data pin to the internal circuit, and a second fixing mode for fixing the second input signal at a second specific potential; and
a second data receiving control circuit (14) which sets the second data receiving circuit to one of the second reception mode and second fixing mode depending on an operation mode of the internal circuit.

8. The card device according to claim 1, further comprising:
an interface comprising the data pins (DATO to DAT3, CMD, CLK), and
a non-volatile memory device (16), and wherein
the internal circuit (15) controls writing of data into the non-volatile memory device and reading of data from the non-volatile memory device depending on an access request supplied from the host device through the interface;
the data receiving circuits (13) includes data receivers which are connected between the internal circuit and the data pins and.are capable of operating in one of a reception mode for supplying an input signal depending on a potential of the data pins to the internal circuit, and a fixing mode for fixing the input signal at a specific potential; and
the receiving control circuit (14) selects a receiver that is not necessary in communication with the host device out of the receivers in accordance with a command from the host device for designating a bit width to be used in data transfer between the internal circuit and host device or a present state of the internal circuit, and sets the selected receiver to the fixing mode.

9. The device according to claim 8, wherein the receiving control circuit selects a data pin that is not necessary for transferring data out of the data pins in accordance with the bit width, and sets the receiver corresponding to the selected data pin to the fixing mode.

10. The device according to claim 8, wherein the receiving control circuit determines whether or not the internal circuit is set to a standby state in which data is not transferred between the host device and the card device through the data pins, and sets the receiver corresponding to the selected data pin to the fixing mode when the internal circuit is set to the standby state.

11. The device according to claim 8, wherein the receiving control circuit determines whether or not the internal circuit is set to an inactive state in which it is not necessary to respond to any command from the host device, and sets the receiver to the fixing mode when the internal circuit is set to the inactive state.

12. The device according to claim 8, wherein the interface further comprising a chip select signal pin for receiving a chip select signal from the host device; and
the receiving control circuit determines whether the chip select signal indicates an active state showing the card device is selected or an inactive state showing the card device is not selected, and sets receivers corresponding to the data pins to the fixing mode when the chip select signal indicates an inactive state.

## Patentansprüche

1. Kartenvorrichtung, die abnehmbar mit einer Host-Vorrichtung verbindbar ist, mit mehreren Datenstiften (DAT0 bis DAT3) und ferner mit:
einer internen Schaltung (14), die in der Lage ist, in einem ersten Betriebsmodus zum Ausführen eines Datentransfers mit der Hostvorrichtung durch Verwenden der mehreren Datenstifte oder in einem zweiten Betriebsmodus zum Ausführen eines Datentransfers mit der Host-Vorrichtung durch Verwenden eines bestimmten Datenstifts oder bestimmter Stifte (DAT0) aus den mehreren Datenstiften zu arbeiten, wobei ein verbleibender Datenstift oder verbleibende Stifte bei dem zweiten Modus nicht verwendet wird/werden;
einer Datenempfangsschaltung (13), die zwischen der internen Schaltung und dem verbleibenden Datenstift oder den verbleibenden Stiften (DAT1 und DAT2) verbunden ist, zum Liefern eines Eingangssignals zu der internen Schaltung, wobei die Datenempfangsschaltung (13) in der Lage ist, in einem Empfangsmodus oder einem Haltemodus zu arbeiten, und wobei das an die interne Schaltung zu liefernde Eingangssignal im Empfangsmodus von einem Potential des verbleibenden Datenstifts oder der verbleibenden Stifte (DAT1 und DAT2) im Empfangsmodus abhängig ist und auf ein bestimmtes Potential in dem Haltemodus gehalten wird; und
einer Datenempfangssteuerschaltung (14), die die Datenempfangsschaltung in den Empfangsmodus einstellt, wenn die interne Schaltung in dem ersten Betriebsmodus eingestellt wird, und in den Fixiermodus einstellt, wenn die interne Schaltung in dem zweiten Betriebsmodus eingestellt ist.

2. Vorrichtung gemäß Anspruch 1, bei der die Datenempfangsschaltung (13) umfasst:
einen Steuersignaleingangsanschluss (CaNT), der ein Steuersignal von der Datenempfangssteuerschaltung (14) empfängt;
einen Potentialeingangsanschluss, in den das Potential des nicht benutzten Datenstifts (DAT1, DAT2) eingegeben wird;
einen Ausgangsanschluss (IN), der mit der internen Schaltung verbunden ist; und
ein Logikgatter (UND, ODER), das Eingangsanschlüsse umfasst, die mit dem Potentialeingangsanschluss und dem Steuersignaleingangsanschluss verbunden sind, ein Potential des Ausgangsanschlusses auf einen logischen Pegel von "1" oder "0" hält, wenn das Steuersignal in einem aktiven Zustand eingestellt ist, und das Potential des Ausgangsanschlusses abhängig von einem Potential des Potentialeingangsanschlusses einstellt, wenn das Steuersignal in einem inaktiven Zustand eingestellt ist, und
die Datenempfangsschaltung das Steuersignal in einem aktiven Zustand einstellt, wenn die interne Schaltung in dem zweiten Betriebsmodus eingestellt ist, und in einem inaktiven Zustand einstellt, wenn die interne Schaltung in dem ersten Betriebsmodus eingestellt ist.

3. Vorrichtung gemäß Anspruch 1, bei der die Datenempfangssteuerschaltung umfasst:
eine Einstellschaltung, die die Datenempfangsschaltung in den Haltemodus in Abhängigkeit von der Lieferung von Leistung von der Host-Vorrichtung zu der Speicherkarte einstellt; und
einen Controller, der die Datenempfangsschaltung von dem Haltemodus in den Empfangsmodus ändert, wenn der erste Betriebsmodus bestimmt wird, und die Datenempfangsschaltung in dem Haltemodus hält, wenn der zweite Betriebsmodus bestimmt wird.

4. Vorrichtung gemäß Anspruch 1, bei der die interne Schaltung in dem ersten oder zweiten Betriebsmodus abhängig von einem Busbreiten-Änderungsbefehl von der Host-Vorrichtung zum Bestimmen einer Bitbreite eingestellt wird, die bei dem Datentransfer mit der Host-Vorrichtung zu verwenden ist, und
die Datenempfangssteuerschaltung die Datenempfangsschaltung in den Empfangsmodus oder Fixiermodus abhängig von der durch den Busbreiten-Änderungsbefehl bestimmten Bitbreite einstellt.

5. Vorrichtung gemäß Anspruch 1, ferner mit:
einem Befehlsstift (CMD) zum Empfangen eines Befehls von der Host-Vorrichtung;
einer Befehlsempfangsschaltung (139A), die zwischen dem Befehlsstift und der internen Schaltung verbunden und in der Lage ist, in einem Befehlsempfangsmodus zum Liefern eines Eingangsbefehlssignals abhängig von einem Potential des Befehlsstifts zu der internen Schaltung oder einem Befehlshaltemodus zum Halten des Eingangsbefehlssignals auf einen bestimmten Potential verbunden ist; und
einer Befehlsempfangssteuerschaltung, die die Befehlsempfangsschaltung in den Befehlsempfangsmodus oder Befehlshaltemodus abhängig von einem Betriebsmodus der internen Schaltung einstellt.

6. Vorrichtung gemäß Anspruch 1, ferner mit:
einem Taktstift (CLK) zum Empfangen eines Taktsignals von der Host-Vorrichtung;
einer Taktempfangsschaltung (141A), die zwischen dem Taktstift und der internen Schaltung verbunden und in der Lage ist, in dem Taktempfangsmodus zum Liefern eines Eingangstaktsignals abhängig von einem Potential des Taktstiftes zu der internen Schaltung oder in einem Takthaltemodus zum Halten des Eingangstaktsignals auf einen bestimmten Potential zu arbeiten; und
einer Taktempfangssteuerschaltung, die die Taktempfangsschaltung in den Taktempfangsmodus oder Takthaltemodus abhängig von einem Betriebsmodus der internen Schaltung einstellt.

7. Vorrichtung gemäß Anspruch 1, ferner mit:
einer zweiten Datenempfangsschaltung (13A), die zwischen der internen Schaltung und dem bestimmten Datenstift (DAT0) verbunden ist, der bei dem zweiten Betriebsmodus verwendet wird, und die in der Lage ist, in einem zweiten Empfangsmodus zum Liefern eines zweiten Eingangssignals an die internen Schaltung abhängig von einem Potential des bestimmten Datenstifts oder in einem zweiten Haltemodus zum Halten des zweiten Eingangssignals auf einen zweitem bestimmten Potential zu arbeiten; und
einer zweiten Datenempfangssteuerschaltung (14), die die zweite Datenempfangsschaltung in den zweiten Empfangsmodus oder den zweiten Haltemodus abhängig von einem Betriebsmodus der internen Schaltung einstellt.

8. Kartenvorrichtung gemäß Anspruch 1, ferner mit:
einer Schnittstelle mit den Datenstiften (DAT0 bis DAT3, CMD, CLK), und
einer nicht flüchtigen Speichervorrichtung (16), und wobei
die interne Schaltung (15) das Schreiben von Daten in die nicht flüchtige Speichervorrichtung und das Lesen von Daten aus der nicht flüchtigen Speichervorrichtung abhängig von einer von der Host-Vorrichtung durch die Schnittstelle gelieferten Zugriffsanfrage steuert;
die Datenempfangsschaltungen (13) Datenempfänger umfassen, die zwischen der internen Schaltung und den Datenstiften verbunden und in der Lage, in einem Empfangsmodus zum Liefern eines Eingangssignals an der internen Schaltung abhängig von einem Potential der Datenstifte und in einem Haltemodus zum Halten des Eingangssignals auf einen bestimmten Potential zu arbeiten; und
die Empfangssteuerschaltung (14) einen Empfänger, der nicht notwendigerweise in Kommunikation mit der Host-Vorrichtung ist, aus den Empfängern in Übereinstimmung mit einem Befehl von der Hostvorrichtung auswählt, zum Bestimmen einer bei dem Datentransfer zwischen der internen Schaltung und der Host-Vorrichtung zu verwendenden Bitbreite oder eines aktuellen Zustands der internen Schaltung, und den ausgewählten Empfänger in den Haltemodus einstellt.

9. Vorrichtung gemäß Anspruch 8, bei der die Empfangssteuerschaltung einen Datenstift, der zum Transferieren von Daten nicht notwendig ist, aus den Datenstiften in Übereinstimmung mit der Bitbreite auswählt und den Empfänger entsprechend dem ausgewählten Datenstift in den Haltemodus einstellt.

10. Vorrichtung gemäß Anspruch 8, bei der die Empfangssteuerschaltung bestimmt, ob die interne Schaltung in einem Standby-Zustand eingestellt ist oder nicht, bei dem keine Daten zwischen der Host-Vorrichtung und der Datenvorrichtung durch die Datenstifte transferiert werden, und den Empfänger entsprechend dem ausgewählten Datenstift in den Haltemodus einstellt, wenn die interne Schaltung in dem Standby-Zustand eingestellt ist.

11. Vorrichtung gemäß Anspruch 8, bei der die Empfangssteuerschaltung bestimmt, ob die interne Schaltung in einem inaktiven Zustand eingestellt ist oder nicht, bei dem es nicht notwendig ist, auf irgendeinen Befehl von der Host-Vorrichtung zu reagieren, und den Empfänger in den Haltemodus einstellt, wenn die interne Schaltung in dem inaktiven Zustand eingestellt ist.

12. Vorrichtung gemäß Anspruch 8, bei der die Schnittstelle ferner einen Chip-Auswahlsignalstift zum Empfangen eines Chip-Auswahlsignals von der Host-Vorrichtung umfasst; und
die Empfangssteuerschaltung bestimmt, ob das Chip-Auswahlsignal einen aktiven Zustand angibt, der zeigt, dass die Kartenvorrichtung ausgewählt ist, oder einen inaktiven Zustand anzeigt, der zeigt, dass die Kartenvorrichtung nicht ausgewählt ist, und Empfänger entsprechend den Datenstiften in den Haltemodus einstellt, wenn das Chip-Auswahlsignal einen inaktiven Zustand angibt.

## Revendications

1. Dispositif de carte qui peut être fixé de façon amovible sur un dispositif hôte, comprenant plusieurs broches de données (DAT0 à DAT3) et comprenant en outre :
un circuit interne (14) qui peut fonctionner dans un mode pris parmi un premier mode de fonctionnement pour exécuter un transfert de données avec le dispositif hôte en utilisant les plusieurs broches de données et un second mode de fonctionnement pour exécuter un transfert de données avec le dispositif hôte en utilisant une broche ou des broches de données spécifiques (DAT0) prises parmi les plusieurs broches de données, une broche ou des broches de données restantes n'étant pas utilisée(s) dans le second mode ;
un circuit de réception de données (13) qui est connecté entre le circuit interne et la broche ou les broches de données restantes (DAT1 et DAT2) pour appliquer un signal d'entrée sur le circuit interne, le circuit de réception de données (13) pouvant fonctionner dans un mode pris parmi un mode de réception et un mode de fixation et le signal d'entrée destiné à être appliqué sur le circuit interne dépendant d'un potentiel de la broche ou des broches de données restantes (DAT1 et DAT2) dans le mode de réception et étant fixé à un potentiel spécifique dans le mode de fixation ; et
un circuit de commande de réception de données (14) qui établit le circuit de réception de données dans le mode de réception lorsque le circuit interne est établi dans le premier mode de fonctionnement et dans le mode de fixation lorsque le circuit interne est établi dans le second mode de fonctionnement.

2. Dispositif selon la revendication 1, dans lequel le circuit de réception de données (13) comprend :
une borne d'entrée de signal de commande (CaNT) qui reçoit un signal de commande en provenance du circuit de commande de réception de données (14) ; une borne d'entrée de potentiel sur laquelle le potentiel de la broche de données inutilisée (DAT1, DAT2) est entré ; une borne de sortie (IN) qui est connectée au circuit interne ; et
une porte logique (ET, OU) qui comprend des bornes d'entrée qui sont connectées à la borne d'entrée de potentiel et à la borne d'entrée de signal de commande, qui fixe un potentiel de la borne de sortie à un niveau logique d'une valeur prise parmi "1" et "0" lorsque le signal de commande est établi dans un état actif et qui établit le potentiel de la borne de sortie en fonction d'un potentiel de la borne d'entrée de potentiel lorsque le signal de commande est établi dans un état inactif ; et
le circuit de commande de réception de données établit le signal de commande dans un état actif lorsque le circuit interne est établi dans le second mode de fonctionnement et dans un état inactif lorsque le circuit interne est établi dans le premier mode de fonctionnement.

3. Dispositif selon la revendication 1, dans lequel le circuit de commande de réception de données comprend :
un circuit d'établissement qui établit le circuit de réception de données dans le mode de fixation en réponse à l'application de puissance depuis le dispositif hôte sur la carte à mémoire ; et un contrôleur qui fait passer le circuit de réception de données du mode de fixation au mode de réception lorsque le premier mode de fonctionnement est désigné et qui maintient le circuit de réception de données dans le mode de fixation lorsque le second mode de fonctionnement est désigné.

4. Dispositif selon la revendication 1, dans lequel le circuit interne est établi dans un mode pris parmi les premier et second modes de fonctionnement en fonction d'une commande de modification de largeur de bus en provenance du dispositif hôte pour désigner une largeur binaire à utiliser lors d'un transfert de données avec le dispositif hôte ; et
le circuit de commande de réception de données établit le circuit de réception de données dans un mode pris parmi le mode de réception et le mode de fixation en fonction de la largeur binaire qui est désignée par la commande de modification de largeur de bus.

5. Dispositif selon la revendication 1, comprenant en outre :
une broche de commande (CMD) pour recevoir une commande en provenance du dispositif hôte ;
un circuit de réception de commande (139A) qui est connecté entre la broche de commande et le circuit interne et qui peut fonctionner dans un mode pris parmi un mode de réception de commande pour appliquer un signal de commande d'entrée en fonction d'un potentiel de la broche de commande sur le circuit interne et un mode de fixation de commande pour fixer le signal de commande d'entrée à un potentiel spécifique ; et
un circuit de commande de réception de commande qui établit le circuit de réception de commande dans un mode pris parmi le mode de réception de commande et le mode de fixation de commande en fonction d'un mode de fonctionnement du circuit interne.

6. Dispositif selon la revendication 1, comprenant en outre :
une broche d'horloge (CLK) pour recevoir un signal d'horloge en provenance du dispositif hôte ;
un circuit de réception d'horloge (141 A) qui est connecté entre la broche d'horloge et le circuit interne et qui peut fonctionner dans un mode pris parmi un mode de réception d'horloge pour appliquer un signal d'horloge d'entrée en fonction d'un potentiel de la broche d'horloge sur le circuit interne et un mode de fixation d'horloge pour fixer le signal d'horloge d'entrée à un potentiel spécifique ; et
un circuit de commande de réception d'horloge qui établit le circuit de réception d'horloge dans un mode pris parmi le mode de réception d'horloge et le mode de fixation d'horloge en fonction d'un mode de fonctionnement du circuit interne.

7. Dispositif selon la revendication 1, comprenant en outre :
un second circuit de réception de données (13A) qui est connecté entre le circuit interne et la broche de données spécifique (DAT0) qui est utilisée dans le second mode de fonctionnement et qui peut fonctionner dans un mode pris parmi un second mode de réception pour appliquer un second signal d'entrée en fonction d'un potentiel de la broche de données spécifique sur le circuit interne et un second mode de fixation pour fixer le second signal d'entrée à un second potentiel spécifique ; et
un second circuit de commande de réception de données (14) qui établit le second circuit de réception de données dans un mode pris parmi le second mode de réception et le second mode de fixation en fonction d'un mode de fonctionnement du circuit interne.

8. Dispositif de carte selon la revendication 1, comprenant en outre :
une interface qui comprend les broches de données (DAT0 à DAT3, CMD, CLK) ; et
un dispositif de mémoire non volatile (16), et dans lequel :
le circuit interne (15) commande l'écriture de données à l'intérieur du dispositif de mémoire non volatile et la lecture de données à partir du dispositif de mémoire non volatile en fonction d'une requête d'accès qui est appliquée depuis le dispositif hôte par l'intermédiaire de l'interface;
le circuit de réception de données (13) inclut des récepteurs de données qui sont connectés entre le circuit interne et les broches de données et qui peuvent fonctionner dans un mode pris parmi un mode de réception pour appliquer un signal d'entrée en fonction d'un potentiel des broches de données sur le circuit interne et un mode de fixation pour fixer le signal d'entrée à un potentiel spécifique ; et
le circuit de commande de réception (14) sélectionne un récepteur qui n'est pas nécessairement en communication avec le dispositif hôte parmi les récepteurs conformément à une commande en provenance du dispositif hôte pour désigner une largeur binaire à utiliser lors d'un transfert de données entre le circuit interne et le dispositif hôte ou un état courant du circuit interne, et établit le récepteur sélectionné dans le mode de fixation.

9. Dispositif selon la revendication 8, dans lequel le circuit de commande de réception sélectionne une broche de données qui n'est pas nécessaire pour transférer des données en provenance des broches de données conformément à la largeur binaire et établit le récepteur correspondant à la broche de données sélectionnée dans le mode de fixation.

10. Dispositif selon la revendication 8, dans lequel le circuit de commande de réception détermine si oui ou non le circuit interne est établi dans un état d'attente dans lequel des données ne sont pas transférées entre le dispositif hôte et le dispositif de carte par l'intermédiaire des broches de données et établit le récepteur correspondant à la broche de données sélectionnée dans le mode de fixation lorsque le circuit interne est établi dans l'état d'attente.

11. Dispositif selon la revendication 8, dans lequel le circuit de commande de réception détermine si oui ou non le circuit interne est établi dans un état inactif dans lequel il n'est pas nécessaire de répondre à une quelconque commande en provenance du dispositif hôte et établit le récepteur dans le mode de fixation lorsque le circuit interne est établi dans l'état inactif.

12. Dispositif selon la revendication 8, dans lequel l'interface comprend en outre une broche de signal de sélection de puce pour recevoir un signal de sélection de puce en provenance du dispositif hôte ; et
le circuit de commande de réception détermine si le signal de sélection de puce indique un état actif représentant que le dispositif de carte est sélectionné ou un état inactif représentant que le dispositif de carte n'est pas sélectionné, et établit des récepteurs correspondant aux broches de données dans le mode de fixation lorsque le signal de sélection de puce indique un état inactif.
